Europäisches Patentamt

European Patent Office

Office européen des brevets

(11) Veröffentlichungsnummer : **0 214 114 B1**

## (12) EUROPÄISCHE PATENTSCHRIFT

(45) Veröffentlichungstag der Patentschrift :
19.10.88

(21) Anmeldenummer : 86890205.7

(22) Anmeldetag : 10.07.86

(51) Int. Cl.⁴ : **H 02 K 24/00, G 08 C 19/38,**
**G 09 D  3/12, G 08 C 19/48**

(54) **Drehmelder.**

(30) Priorität : 30.07.85 DE 3527226

(43) Veröffentlichungstag der Anmeldung :
11.03.87 Patentblatt 87/11

(45) Bekanntmachung des Hinweises auf die Patenterteilung : 19.10.88 Patentblatt 88/42

(84) Benannte Vertragsstaaten :
**AT CH FR GB IT LI SE**

(56) Entgegenhaltungen :
**CH-A-   588 133**
**DE-B- 1 914 854**
**US-A- 2 432 982**
**US-A- 2 507 763**
**US-A- 3 195 039**
**US-A- 3 366 905**

(73) Patentinhaber : **VOEST-ALPINE AUTOMOTIVE Gesell-**
**schaft mbh**
**Muldenstrasse 5**
**A-4020 Linz (AT)**

(72) Erfinder : **Ritzinger, Georg, Dipl.-Ing.**
**Kierlingerstrasse 59 a**
**A-3400 Klosterneuburg (AT)**

(74) Vertreter : **Matschnig, Franz, Dipl.-Ing.**
**Siebensterngasse 54 Postfach 452**
**A-1071 Wien (AT)**

**Beschreibung**

Die Erfindung bezieht sich auf einen Drehmelder mit einem Stator, der zumindest zwei, um vorgegebene Winkel gegeneinander versetzte Signalwicklungen aufweist und mit einem, eine Erregerwicklung tragenden Rotor.

Bei einem bekannten Drehmelder dieser Art, auch Resolver genannt (Firmenprospekt « Resolver », Fa. Moore Reed, Nov. 1979), bestehen Rotor und Stator aus Blechpaketen und die Wicklungen sind in Nuten der Pakete eingelegt, d. h. der Aufbau entspricht dem üblicher Elektromotoren. Auf der Rotorwelle sitzt die ringförmige Sekundärwicklung des Einkoppeltransformators, die von der gleichfalls ringförmigen, feststehenden Primärwicklung unter Belassung eines Luftspaltes von außen umgeben ist.

Im Betrieb wird die Rotorwicklung über den Einkoppeltransformator mit einem tonfrequenten Signal gespeist. In zwei um 90° gegeneinander versetzten Wicklungen des Stators werden zwei Ausgangssignale induziert, aus welchen mittels analoger oder digitaler Technik die jeweilige Winkellage der Rotorachse eindeutig abgeleitet werden kann. Derartige Schaltungen gehören zum Stand der Technik und sind z. B. in Electronic Design 19, Sept. 13. p. 72ff (1975) beschrieben.

Der bekannte Drehmelder ist mechanisch sehr aufwendig gebaut, insbesondere die Herstellung der Rotor- und Statorwicklungen sowie der zugehörigen laminierter Kerne treibt die Kosten des Drehmelders in die Höhe.

Es wurde auch vorgeschlagen (DE-OS 34 32 395, veröffentlicht 13-3-86), für den Stator einen Ringkern zu verwenden, wodurch eine wesentliche Vereinfachung des Statoraufbaues ermöglicht ist. Allerdings ist das Wickeln eines Ringkernes aufwendig und dementsprechend noch immer mit vergleichsweise hohen Kosten verbunden.

Letzteres gilt auch für den aus der US-PS 27 04 353 bekannt gewordenen Drehgeber, der zwei in einanderliegende Spulen, nämlich eine äußere Toroidspule und eine innere, gerade gewickelte Zylinderspule besitzt, wobei die innere Spule eine mit Wechselstrom gespeiste Erregerwicklung aufweist. Eine z. B. auf der Achse eines Magnetkompaß sitzende, gegen ihre Drehachse geneigte Scheibe sorgt durch entsprechende Feldumlenkung dafür, daß in drei Wicklungen der Toroidspule ein Drei-Phasen-signal entsteht, aus dem der Verdrehwinkel der Scheibe eindeutig ableitbar ist. Von den hohen Kosten der Toroidwicklung abgesehen, ist die durch die Weicheisenscheibe gegebene lokale Kopplung zwischen der inneren und der äußeren Spule nur sehr schwach, sodaß zur Erzielung genügend großer Ausgangssignale eine verhältnismäßig hohe Erregerleistung erforderlich ist.

Zum Stand der Technik sei auch die US-PS 25 90 845 erwähnt, die gleichfalls einen Drehmelder der eingangs genannten Art beschreibt. Rotor und Stator sind vielpolig ausgestaltet und weisen komplizierte Wicklungsformen - ähnlich jenen von Elektromotoren - auf, wobei man durch Zusammenschaltung von Teilwicklungen auch komplexere Ausgangssignale zur Erzielung einer höheren Auflösung erhält. Abgesehen von dem hohen konstruktiven Aufwand, der mit entsprechenden Kosten verbunden ist, ist auch die Auswertung der Ausgangssignale schwierig.

Ziel der Erfindung ist die Schaffung eines im Aufbau einfachen und sehr kostengünstigen Drehmelders, der insbesondere im Zusammenhang mit Schrittmotoren zur Rückmeldung der durchgeführten Schritte eingesetzt werden soll. Dementsprechen soll die Auflösung mindestens einen Schritt betragen, d. h. bei einem Schrittmotor, der z. B. 200 Schritte pro Umdrehung durchführt, mindestens 1,8°. Die Spannungen an den Signalwicklungen sollen nach Möglichkeit eine Sinusfunktion des Rotordrehwinkels sein, damit der Schalungsaufwand für die Signalauswertung nieder bleibt.

Dieses Ziel läßt sich mit einem Drehmelder der eingangs genannten Art erreichen, bei welchem erfindungsgemäß der Stator eine axial ausgerichtete, an sich bekannte Zylinderspule mit Schrägwicklungen und der Rotor einen die Erregerwicklung tragenden Stabkern aufweist, wobei die beiden Enden des Stabkerns unter Belassung eines Luftspaltes der Innenfläche der Zylinderspule zugekehrt sind und die Zylinderspule an ihrer Außenfläche von einem Mantel aus magnetisch leitfähigem Material umgeben ist.

Die erfindungsgemäße Drehmelderkonstruktion gestattet die Verwendung handelsüblicher Schrägwicklungsspulen, die im Zusammenhang mit Gleichstrommaschinen z. B. aus der DE-OS 22 61 236 oder aus der DE-OS 29 31 724 bekannt geworden sind. Solche Spulen können mit hoher Genauigkeit und preisgünstig auf Wickelmaschinen vollautomatisch hergestellt werden. Der die Außenfläche der Zylinderspule umgebende Mantel aus magnetisch leitfähigem Material führt zu einer Konzentration der Feldlinien im Bereich der Stabkernenden, wodurch sich ein gutes Signal-Störverhältnis ergibt, wozu auch der Umstand beiträgt, daß Fremdfelder abgeschirmt werden, was insbesondere beim Einsatz in Kraftfahrzeugen von Bedeutung ist.

Wenn der Mantel elektrisch leitfähig ist, ergibt sich als zusätzlicher Vorteil, daß auch axiale Wechselfelder, die z. B. von einem mit dem dem Drehmelder verbundenen Schrittmotor herrühren, stark abgeschwächt werden.

Wenn die Zylinderspule selbsttragend ausgebildet ist, kann der Platzbedarf verringert und der Signal-Störabstand weiter erhöht werden.

Eine weitere Ausgestaltung der Erfindung zeichnet sich dadurch aus, daß die Zylinderspule zweilagig bewickelt ist, wobei jede Lage Einzelwicklungen aufweist und je zwei übereinander liegende Einzelwicklungen zu einer Signalwicklung in Serie geschaltet sind. Auch hierdurch ergibt sich eine Verbesserung des Signal-Störverhältnisses.

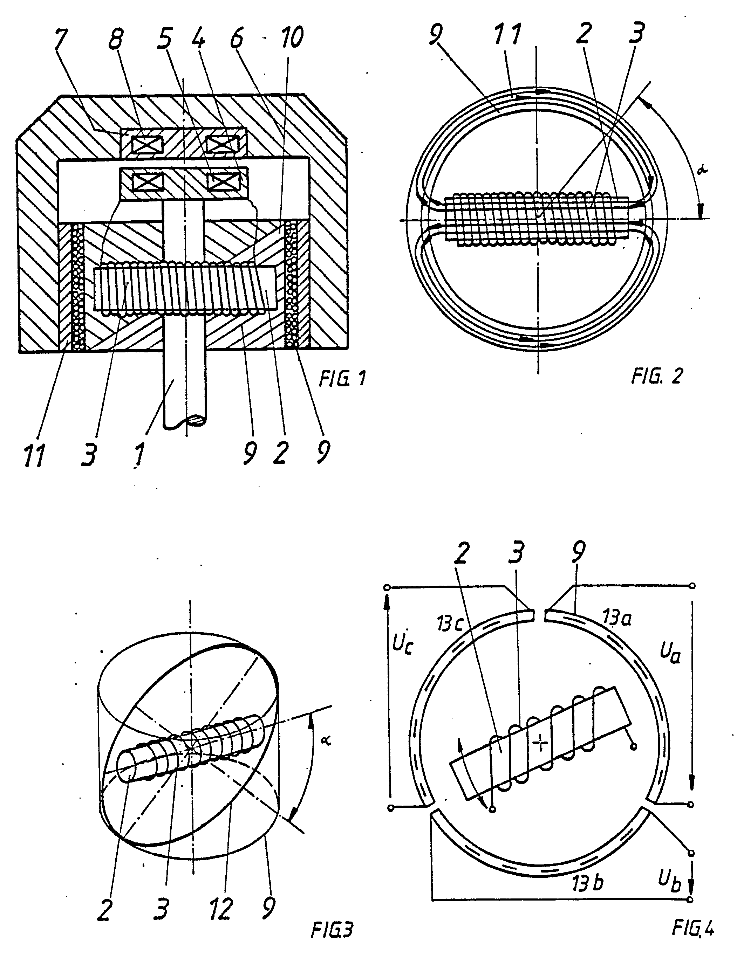

Die Erfindung samt ihren weiteren Vorteilen und Merkmalen ist im folgenden an Hand einer beispielsweisen Ausführungsform näher erläutert und in der Zeichnung dargestellt. In dieser zeigen Fig. 1 einen Längsschnitt durch einen Drehmelder nach der Erfindung, Fig. 2 in schematischer Draufsicht auf einen Drehmelder nach Fig. 1 des Verlauf der magnetischen Feldlininien, Fig. 3 in schaubildlicher Darstellung die Lage des Stabkerns innerhalb der zylinderspule und Fig. 4 in schematischer Draufsicht die Anordnung des Stabkerns mit der Erregerwicklung bezüglich dreier, je um 120° gegeneinander versetzter Signalwicklungen.

Gemäß Fig. 1 ist mit einer Welle 1, die z. B. mit der Welle eines nicht dargestellten Schrittmotors verbunden ist, ein Stabkern 2 drehfest verbunden, der mit einer zylindrischen Erregerwicklung 3 versehen ist. An dem in der Zeichnung oberen Ende der Welle 1 ist eine Hälfte 4 eines üblichen Schalenkerns aus Ferrit od. dgl. befestigt, der bezüglich der Welle 1 axialsymmetrisch ausgebildet ist. In der Kammer der Schalenkernhälfte 4 ist eine Wicklung 5 untergebracht, die an die Erregerwicklung 3 geschaltet ist. Das Gehäuse 6 des Drehgebers trägt die zweite Schaltenkernhälfte 7, in deren Kammer eine Wicklung 8 eingelegt ist. Die Schalenkernhälften 4, 7 liegen in axialsymmetrischer Anordnung unter Belassung eines Luftspaltes einander gegenüber.

Der Stabkern 2 kann innerhalb einer Zylinderspule 9 rotieren, wobei zwischen deren Innenfläche und den Enden des Stabkerns 2 ein Luftspalt 10 verbleibt. An ihrer Außenfläche ist die Zylinderspule 9 von einem Mantel 11 aus magnetisch leitfähigem Material umgeben. Dieser kann beispielsweise durch Umwickeln der Zylinderspule 9 mit einem Band aus Mu-Metall hergestellt sein. Der Mantel 11 kann jedoch auch aus Ferrit, Dynamoblech od. dgl. hergestellt sein.

Die Zylinderspule 9 ist in an sich bekannter Weise schräg bewickelt. In Fig. 3 ist bloß eine Windung 12 der Wicklung eingezeichnet, die übrigen Windungen schließen an diese Windung aneinanderliegend an. Bei Verwendung von drei Signalwicklungen sind drei Wicklungen vorgesehen, die sich — in einem Querschnitt durch die Zylinderspule gesehen — über je 120° erstrecken. Schematisch sind drei solche Signalwicklungen 13a, 13b, 13c in Fig. 4 dargestellt, wobei allerdings zu beachten ist, daß sich wegen der schrägen Wicklungsweise tatsächlich jede Windung jeder einzelnen Signalwicklung in Draufsicht, also in Richtung der Spulenachse gesehen, über 360° erstreckt.

Wie aus Fig. 2 ersichtlich, bildet der Mantel 11 einen magnetischen Rückschluß, der die Feldlinien konzentriert und überdies äußere Felder abschirmt.

Die Wicklungen 5 und 8 der Schalenkernhälften 4 und 7 bilden die Sekundär- bzw. Primärwicklung eines Drehtransformators, der zur berührungslosen Einspeisung einer Wechselspannung, z. B. mit einer Frequenz von 10 kHz, dient. Natürlich könnte die Erregerwicklung 3 auch über Schleifringe angespeist werden.

Das Wechselfeld der Erregerwicklung 3 induziert in den drei Signalwicklungen 13a, b, c Ausgangssignale $u_a$, $u_b$, $u_c$, die sich zu

$$u_a = u_0 \cos(\omega t + \varphi) \sum_{n=1}^{k} \sin\left(\alpha + \frac{2\pi}{3} \cdot \frac{n-1}{k}\right)$$

$$u_b = u_0 \cos(\omega t + \varphi) \sum_{n=1}^{k} \sin\left(\alpha + \frac{2\pi}{3} \cdot \frac{n-1}{k} + \frac{2\pi}{3}\right)$$

$$u_c = u_0 \cos(\omega t + \varphi) \sum_{n=1}^{k} \sin\left(\alpha + \frac{2\pi}{3} \cdot \frac{n-1}{k} + \frac{4\pi}{3}\right)$$

ergeben, worin

$u_0$.... Maximalwert des induzierten Signals

$\alpha$.... Verdrehungswinkel des Stabkerns

$\varphi$.... Rotor-Stator-Phasenverschiebung (Fig. 2,3)

$\omega$.... Kreisfrequenz der Speisespannung

$k$.... Anzahl der Wicklungen je Signalwicklung

$n$.... Summationsindex

Es ist ersichtlich, daß der Winkel $\alpha$ aus zwei der drei Signalspannungen $u_a$, $u_b$, $u_c$ berechenbar ist, doch ist es zweckmäßig, wenn man auf alle drei Signalspannungen zurückgreifen kann, da sich dann z. B. die Division durch nullnahe Werte vermeiden läßt.

Die Berechnung des Winkels $\alpha$ kann in bekannten Schaltungen in analoger oder digitaler Weise erfolgen und bildet nicht Gegenstand der vorliegenden Erfindung.

Jedenfalls können auch bloß zwei Signalwicklungen vorgesehen sein, die dann je um 90° gegeneinander versetzt sind.

Um das Signal-Störverhältnis zu erhöhen, kann man die Zylinderspule in Schrägwickelart zweilagig bewickeln, wobei jede Lage z. B. drei Einzelwicklungen aufweist und je zwei übereinanderliegende Einzelwicklungen zu einer Signalwicklung in Serie geschaltet sind.

Um axiale Wechselfelder, die z. B. von dem auf der Welle 1 sitzenden Schrittmotor stammen, zu unterdrücken, kann man den magnetisch leitfähigen Mantel 11 aus einem Material herstellen, das außerdem elektrisch leitfähig ist. Da der Luftspalt 10 zwischen den Enden des Stabkernes 2 und der Innenfläche der Zylinderspule 9 klein sein soll, kann es auch empfehlenswert sein, die Innenfläche der Zylinderspule 9 mit einer harten Schutzschicht (nicht dargestellt) zu versehen, um bei einem allfälligen Schleifen der Stabkernenden an der Spule 9 eine Beschädigung der Wicklung zu vermeiden.

Wegen der hohen Genauigkeit, mit der sich Schrägwickelspulen ausführen lassen, erhält man für die lageabhängige Funktion der Signalspannungen tatsächlich eine Sinusfunktion, sodaß die Berechnung des Lagewinkels α mit Hilfe einfacher Algorithmen ohne besondere Korrekturen möglich ist. Darüber hinaus ist die Zylinderspule mit Schrägwicklung vollautomatisch und daher kostengünstig herstellbar und es ist eine gute Linearität und Reproduzierbarkeit erzielbar. Der hier verwendete Begriff « Stabkern » schließt z. B. auch eine Bauart ein, bei welcher der Rotor an seinen Enden mit Polschuhen versehen ist, wie dies aus dem Elektromaschinenbau bekannt ist.

**Patentansprüche**

1. Drehmelder mit einem Stator (9), der zumindest zwei, um vorgegebene Winkel gegeneinander versetzte Signalwicklungen aufweist und mit einem, eine Erregerwicklung (3) tragenden Rotor (2), dadurch gekennzeichnet, daß der Stator eine axial ausgerichtete, an sich bekannte Zylinderspule (9) mit Schrägwicklungen und der Rotor einen die Erregerwicklung (3) tragenden Stabkern (2) aufweist, wobei die beiden Enden des Stabkerns (2) unter Belassung eines Luftspaltes (10) der Innenfläche der Zylinderspule (9) zugekehrt sind und die Zylinderspule an ihrer Außenfläche von einem Mantel (11) aus magnetisch leitfähigem Material umgeben ist.

2. Drehmelder nach Anspruch 1, dadurch gekennzeichnet, daß der Mantel (11) elektrisch leitfähig ist.

3. Drehmelder nach Anspruch 1 oder 2, dadurch gekennzeichnet, daß die Zylinderspule (9) selbsttragend ausgebildet ist.

4. Drehmelder nach einem der Ansprüche 1 bis 3, dadurch gekennzeichnet, daß die Zylinderspule (9) zweilagig bewickelt ist, wobei jede Lage n Einzelwicklungen aufweist und je zwei übereinander liegende Einzelwicklungen zu einer Signalwicklung in Serie geschaltet sind.

**Claims**

1. A selsyn comprising a stator (9) having at least two signal windings offset from one another by predetermined angles, and comprising a rotor (2) bearing an energization winding (3), characterised in that the stator comprises an axially aligned cylindrical coil (9) known per se with inclined windings, and the rotor comprises a rod core (2) carrying the energization winding (3), the two ends of the rod core (2) being directed towards the inner surface of the cylindrical coil (9) with an air gap (10) left free between them and the outer surface of the cylindrical coil being surrounded by a jacket (11) of magnetically conductive material.

2. A selsyn according to claim 1, characterised in that the jacket (11) is electrically conductive.

3. A selsyn according to claim 1 or 2, characterised in that the cylindrical core (9) is self-supporting.

4. A selsyn according to any one of claims 1 to 3, characterised in that the cylindrical core (9) is wound in two layers, each layer having n individual windings and each pair of individual windings situated one above the other being connected in series to form a signal winding.

**Revendications**

1. Indicateur de rotation, comportant un stator (9), qui porte au moins deux enroulements de signalisation décalés l'un par rapport à l'autre d'un angle prédéterminé, et un rotor (2), qui porte un enroulement inducteur (3), indicateur caractérisé en ce que le stator est une bobine cylindrique (9) connue, orientée axialement et portant des enroulements hélicoïdaux et le rotor est un barreau (2) portant l'enroulement inducteur (3), les deux extrémités de ce barreau (2) se trouvant vis-à-vis de la surface intérieure de la bobine cylindrique (9) en ménageant un entrefer (10) et cette bobine cylindrique (9) étant entourée, sur sa surface extérieure, par une chemise (11) en une matière magnétiquement conductrice.

2. Indicateur de rotation selon la revendication 1, caractérisé en ce que la chemise (11) est électriquement conductrice.

3. Indicateur de rotation selon la revendication 1 ou 2, caractérisé en ce que la bobine cylindrique (9) est rigide.

4. Indicateur de rotation selon l'une des revendications 1 à 3, caractérisé en ce que la bobine cylindrique (9) est bobinée sur deux couches, chaque couche comportant n enroulements individuels et chaque couple d'enroulements individuels superposés étant connecté en série à un enroulement de signalisation.

FIG. 1

FIG. 2

FIG3

FIG. 4